# EUROPÄISCHE PATENTANMELDUNG

(11) **EP 2 808 085 A1**
(43) Veröffentlichungstag der Anmeldung: **03.12.2014**
(21) Anmeldenummer: 14001860.7
(22) Anmeldetag: 28.05.2014
(51) Int. Cl.: B02C 19/00, B29B 17/04, G07F 7/06

(54) **Vorrichtung und Verfahren zum Zerkleinern von Behältern**

(30) Priorität: 28.05.2013 DE 102013009097; 31.01.2014 DE 102014001170
(71) Anmelder: AMTEC Anlagen- und Maschinen- Technik Düren GmbH, 52353 Düren (DE)
(72) Erfinder: Metzler, Werner, DE - 52134 Herzogenrath (DE)
(74) Vertreter: Castell, Klaus

(57) **Zusammenfassung**

Die Erfindung betrifft eine Vorrichtung zum Bearbeiten von Werkstücken mit einer zentralen Linie um die drehbar Bearbeitungseinrichtungen angeordnet sind und mindestens einer Bearbeitungsstation, die auf einer zur zentralen Linie parallelen Linie angeordnet ist und in der eine Bearbeitungseinrichtung ein Werkstück bearbeitet.

## Beschreibung

Die Erfindung betrifft eine Vorrichtung zum Bearbeiten von Werkstücken, insbesondere eine Vorrichtung zum Zerkleinern von Behältern sowie ein Verfahren zum Zerkleinern von Behältern.

Viele Behälter werden heute als Wertstoff einer weiteren Nutzung zugeführt. Dazu werden Behälter als Mehrweggebilde unbeschädigt zum Hersteller zurückgeführt, dort gereinigt und erneut befüllt. Einweggebinde werden häufig zerkleinert, um sie möglichst einfach als Wertstoff zu transportieren und einer Wiederverwertung zuzuführen.

Es ist bekannt, Kunststoffflaschen zu scannen und zu pressen, um gepressten Kunststoff möglichst sortenrein als Wertstoff weiter zu verwenden. Das Pressen der Kunststoffflaschen führt zu einer erheblichen Volumenreduktion. Derartige Vorrichtungen sind jedoch nur für spezielle Kunststoffbehältnisse geeignet und es müssen für unterschiedliche Behältnisse im Rahmen des Recycling verschiedene Rücknahmeeinrichtungen aufgestellt werden.

Der Erfindung liegt daher die Aufgabe zugrunde, eine Vorrichtung für die Rücknahme unterschiedlicher Behältnisse aus unterschiedlichen Werkstoffen bereitzustellen, mit der eine möglichst weitgehende Volumenreduktion erzielt werden kann.

Diese Aufgabe wird mit einer gattungsgemäßen Vorrichtung mit einer zentralen Linie, um die drehbar Bearbeitungseinrichtungen angeordnet sind, gelöst und die mindestens eine Bearbeitungsstation aufweist, die auf einer zur zentralen Linie parallelen Linie angeordnet ist und in der eine Bearbeitungseinrichtung ein Werkstück bearbeitet.

Bei einer derartigen Vorrichtung ist es vorteilhaft, wenn die Linien senkrecht ausgerichtet sind und das Werkstück in die Bearbeitungsstation fällt. Außerdem ist es besonders vorteilhaft, wenn das Werkstück ein Behälter ist und die Bearbeitungseinrichtungen eine Zerkleinerungseinrichtung aufweisen.

Dies ermöglicht es, ein leeres Behältnis in die Vorrichtung zu geben, so dass das Behältnis in eine Bearbeitungsstation fällt, in der der Behälter zerkleinert wird. Dies führt zu einem einfachen Aufbau einer Vorrichtung, die die Verwendung unterschiedlicher Bearbeitungsstationen erlaubt.

Die zentrale Linie kann eine Achse sein, die die Bearbeitungsstationen hält. Vorteilhaft ist es, wenn auf der zentralen Linie eine Welle angeordnet ist, mit der die Bearbeitungseinrichtungen um die zentrale Linie gedreht werden. Außerdem ist es vorteilhaft, wenn die Bearbeitungseinrichtungen um eine zentrale Achse gedreht werden, die auf der zentralen Linie angeordnet ist.

Unabhängig von der zuvor beschriebenen Vorrichtung wird eine Vorrichtung zum Zerkleinern von Behältern vorgeschlagen, die eine Fräs- oder Mahleinrichtung aufweist, mit der die Behälter zerkleinert werden. Diese Vorrichtung weist vorzugsweise Merkmale der zuvor beschriebenen Vorrichtung auf.

Um eine möglichst gute Zerkleinerung zu erreichen, wird vorgeschlagen, dass die Zerkleinerungseinrichtung zwei aufeinander zu bewegbare Fräs- oder Mahleinrichtungen aufweist. Diese Einrichtungen haben vorzugsweise eine gegenläufige Bewegungsrichtung. Dies ermöglicht es, unterschiedliche Materialien zu Partikeln, wie beispielsweise zu Granulat zu fräsen oder zu mahlen. Je nach Auswahl der Fräs- oder Mahlköpfe und je nach Abstand der Einrichtungen zueinander kann eine spezielle Granulatgröße eingestellt werden.

Um das Granulat aus der Zerkleinerungseinrichtung zu entnehmen, wird vorgeschlagen, dass die Zerkleinerungseinrichtung eine Ausblaseinrichtung aufweist. Dadurch werden die Fräser vorzugsweise auch gleich gekühlt und gereinigt.

Vorteilhaft ist es, wenn oberhalb der Zerkleinerungseinrichtung eine Bearbeitungsstation angeordnet ist, die eine Messeinrichtung aufweist. Dadurch kann der zu bearbeitende Behälter oder das zu bearbeitende Werkstück analysiert werden, um die richtige Bearbeitungseinrichtung auszuwählen und die Bearbeitungsparameter festzulegen.

Vorteilhaft ist es dabei, wenn die Messeinrichtung einen Scanner aufweist. Sofern das Werkstück mit einer Markierung versehen ist, kann der Scanner nicht nur die Form des Werkstücks ablesen, sondern für das Ablesen der Markierung oder eines Codes eingerichtet sein. Dies ermöglichst es auf Behältnissen Markierungen für den Werkstoff des Behältnisses vorzusehen. Beispielsweise können PET-Flaschen einen Barcode aufweisen, der mit einem Scanner lesbar ist, um der Vorrichtung eine Information zur Verfügung zu stellen, mit der eine angemessene Bearbeitungseinrichtung ausgewählt wird. Spezielle Messeinrichtungen können auch RFID oder andere Markierungen auslesen, die es erleichtern, die richtige Bearbeitungseinrichtung zu wählen und das erzeugte Granulat einem speziellen Behälter zuzuführen.

Um Festzustellen, ob das Behältnis leer ist oder noch eine Restfüllung aufweist, wird vorgeschlagen, dass die Messeinrichtung eine Waage aufweist. Dies ermöglicht es, noch nicht vollständig geleerte Behältnisse von einer weiteren Bearbeitung auszuschließen. Das Gewicht des Behältnisses ermöglicht es aber auch, das Behältnis zu identifizieren oder eine Identifizierung zu überprüfen.

Vorteilhaft ist es, wenn unterhalb der Zerkleinerungseinrichtung ein Aufnahmebehälter angeordnet ist. Das zerkleinerte Material des Werkstücks kann dadurch in einen Aufnahmebehälter fallen. Wenn mehrere Aufnahmebehälter vorgesehen sind, kann für unterschiedliche Werkstückmaterialien jeweils ein Aufnahmebehälter vorgesehen sein.

Dabei ist es besonders vorteilhaft, wenn mehrere Aufnahmebehälter um die zentrale Linie drehbar angeordnet sind.

Dies ermöglicht es, das Granulat unterschiedlicher Werkstoffe von verschiedenen Werkstücken in unterschiedlichen Behältern zu sammeln. Das Material kann dann sortenrein entsorgt werden. Die Vorrichtung kann auch eine Heizeinrichtung aufweisen, die es ermöglicht, das Granulat zu schmelzen, um das Volumen noch weiter zu reduzieren und um den Wertstoff als Formkörper zur Wiederaufbereitung zu transportieren.

Weitere Vorteilhafte Ausführungsformen beschreiben die Unteransprüche.

Ein erfindungsgemäßes Verfahren zum Zerkleinern von Behältern sieht vor, dass die Behälter in eine Beladestation gegeben werden, in eine Zerkleinerungsstation fallen, dort zu Granulat zerkleinert werden und das Granulat in einen Granulatkasten fällt. Die senkrechte Anordnung unterschiedlicher Bearbeitungsstationen übereinander führt dazu, dass das Material mit geringem Förderaufwand von der Beladestation in die Meß- und Prüfstation und über die Zerkleinerungsstation zum Granulatkasten fällt.

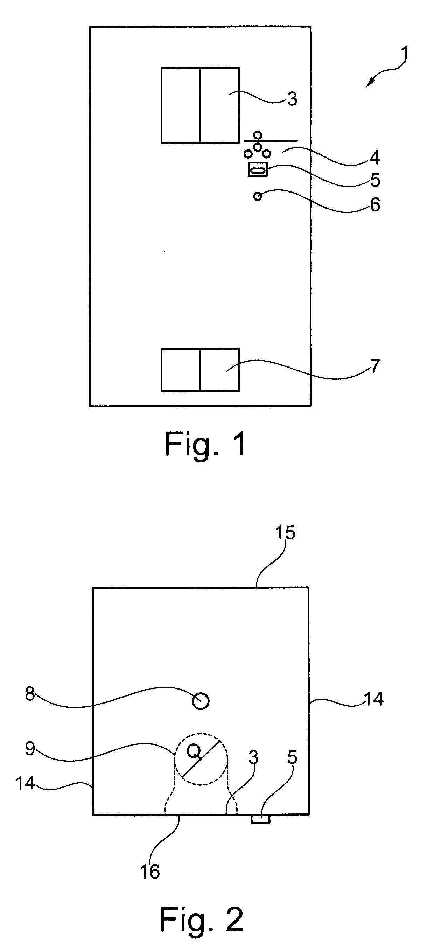

Ein Ausführungsbeispiel einer erfindungsgemäßen Vorrichtung ist in der Zeichnung dargestellt und wird im Folgenden näher erläutert. Es zeigt
- Figur 1: eine Vorderansicht der erfindungsgemäßen Vorrichtung,
- Figur 2: eine teilweise geschnittene Ansicht von oben auf die in Figur 1 gezeigte Vorrichtung,

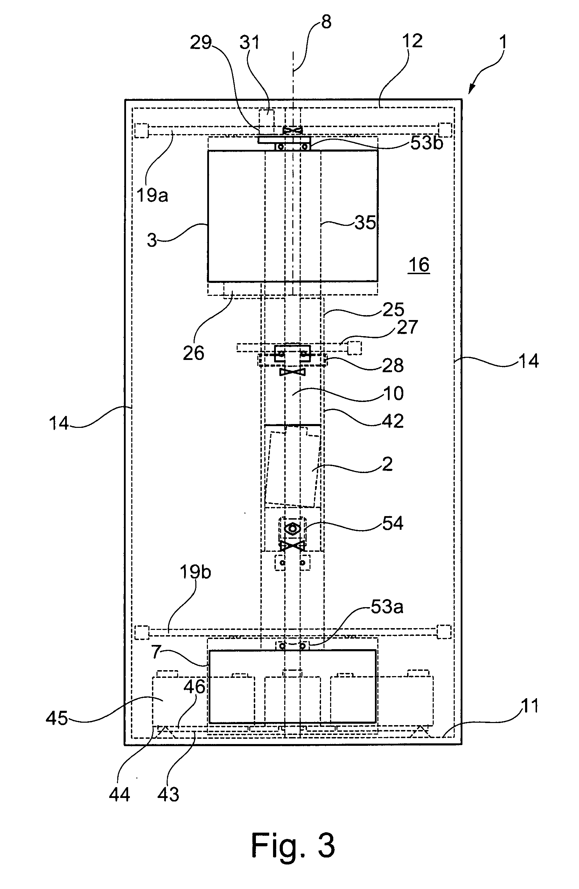

- Figur 3: einen senkrechten Schnitt durch eine Vorrichtung,
- Figur 4: einen waagerechten Schnitt durch die in Figur 1 gezeigte Vorrichtung,
- Figur 5: einen Teilquerschnitt durch die oberen Bearbeitungseinheiten,
- Figur 6: einen senkrechten Querschnitt durch das Werkzeugführungsgehäuse,
- Figur 7: einen waagerechten Querschnitt durch das Werkzeugführungsgehäuse,
- Figur 8: eine Seitenansicht ohne linke Einhausungswand,

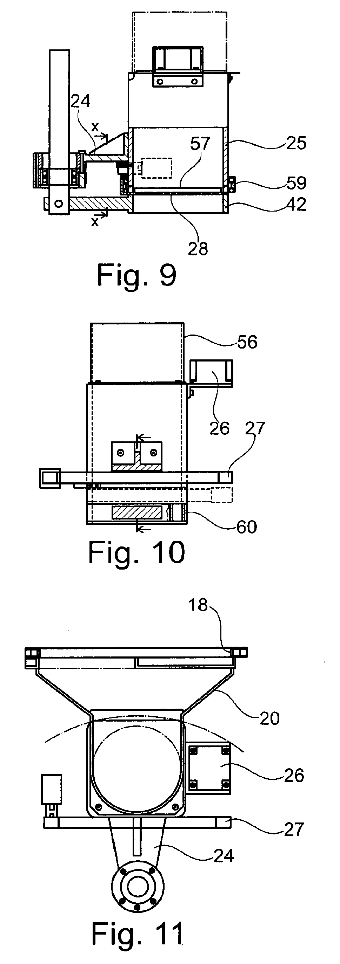

- Figur 9: einen Teilquerschnitt des Aufnahme- und Scannerbehälters,
- Figur 10: Ansicht des Teilquerschnittes aus Figur 9 längs der Linie X-X
- Figur 11: Draufsicht des Scannerbehälters mit Griffmulde,
- Figur 12: einen Teilquerschnitt der unteren Bearbeitungseinheiten mit Drehteller für Granulatbehälter,
- Figur 13: einen Querschnitt durch eine Granulathülse,
- Figur 14: eine Draufsicht auf die in Figur 13 gezeigte Granulathülse
- Figur 15: einen Querschnitt durch eine Werkzeugaufnahme,
- Figur 16: einen Querschnitt durch eine Entlade- und Beladetür,
- Figur 17: eine Ansicht des in Figur 16 gezeigten Querschnittes längs der Linie XVII - XVII
- Figur 18: einen Schnitt durch eine Granulatumwälzung,
- Figur 19: eine Draufsicht auf die in Figur 18 gezeigte Granulatumwälzung,
- Figur 20: einen Bewegungsablauf am Werkstückbearbeitungsgehäuse und
- Figur 21: ein Weg-Zeit-Diagramm des Maschinenablaufs.

Die im Ausführungsbeispiel gezeigte Vorrichtung 1 dient zur Bearbeitung von Werkstücken 2 und insbesondere von Behältern. Ziel ist es, in einer derartigen Vorrich-tung möglichst unterschiedliche Werkstücke zu bearbeiten, um aus unterschiedlichen Werkstoffen Werkstoffgranulate herzustellen. Dazu werden die Verpackungsmaterialien gescannt und je nach Material unterschiedlich behandelt und letztendlich in einem Granulatbehälter zum Abtransport gesammelt. In dem Granulatbehälter sollte dann 100 % reiner Recyclingstoff entsprechend einer speziellen Recyclingnummer komprimiert auf kleinstem Raum gesammelt werden. Vorzugsweise arbeitet die Anlage ohne Bedienungsaufwand nach Einwurf des Materials automatisch.

Dafür hat die Vorrichtung 1 eine Beladetüre 3, eine Anzeigeeinrichtung 4, einen Kartenleser 5 und einen Schlüsselschalter 6. Im unteren Bereich befindet sich unterhalb der Beladetüre 3 eine Entladetüre 7 zur Entnahme des Granulats.

Dezentral zu einer zentralen Linie 8 ist ein Aufnahmebehälter 9 angeordnet.

Auf der zentralen Linie 8 liegt eine starre Achse 10, die mit einer Bodenplatte 11 und einer Deckelplatte 12 verstiftet ist. Gemeinsam mit äußeren Vierkantträgerprofilen 13, die mit der Boden- und Deckelplatte 11, 13 verschraubt sind, wird das Maschinengerüst gebildet. Schallisolierte Seitenwandelemente 14, ein Rückwandelement 15 und ein Vorderwandelement 16 bilden nach erfolgter Komplettmontage die Anlageneinhausung. Das Rückwandelement 15 besitzt eine Öffnung, in die ein Schaltkastengehäuse 17 eingeführt ist. Das Vorderwandelement 16 besitzt zwei Öffnungen, im unteren Bereich für die zweiteilige Entladetüre 7 und im oberen Bereich für die zweiteilige Beladetüre 3. Innerhalb der Öffnung der Beladtüre 3 ist ein Sicherheitslichtvorhang 18 vertikal angebracht. Die zweiteiligen Türen werden durch Zahnriemenachsen 19 geöffnet und geschlossen. An der Innenseite der Vorderwand 16 ist ein Gehäuse für eine Eingriffsmulde 20 befestigt.

Die zentrale Achse 10 bildet somit einen Mittelpunkt, um den alle Dreh- bzw. Schwenkbewegungen stattfinden und zum anderen die Festpunkte zum Einleiten der Dreh- und Schwenkbewegungen. Der Schwenkhebel 21 verbindet über die Achsenmitte auf 180° die oberen Bearbeitungseinheiten für das Schneiden 22 und das Mahlen 23. Versetzt um 90° ist mit dem Schwenkhebel der Arm 24 des Aufnahmescanbehälters 25 verschraubt und verstiftet. Am oberen Ende des Aufnahmebehälters 25 ist seitlich ein Lese-Scannerkopf 26 verschraubt befestigt. An der Rückseite des Aufnahmebehälters 25 ist eine Zahnriemenachse 27 zum Öffnen und Schließen des Scannerbodens 28 verschraubt. Über den mit der Achse 10 verstifteten Festpunkthebel 29 wird mittels eines Stirnradgetriebes 30, 31 mit einem Schrittmotor 32 die Drehbewegung des Schwenkhebels 21 eingeleitet.

Über die Schrittmotore 33 mit ihren Ritzeln 34, die sich im Eingriff befinden, mit den Zahnstangen 35 des Werkzeugführungsgehäuses 36 werden die oberen Bearbeitungseinheiten für Schneiden und Mahlen vertikal nach unten verfahren.

Zwischen dem oberen Schwenkhebel 21 und dem unteren Schwenkhebel 37 sind Führungsstangen 38 um 45° versetzt über Achsmitte auf 180° fest eingespannt. Zwischen den Führungsstangen 38 wird das Werkzeugführungsgehäuse 36 mit den eingebauten Linearkugellagern 39 vertikal verfahren.

90° versetzt gegenüber den Führungsstangen 38 sind auf 180° mit dem Werkzeugführungsgehäuse 36 Zentrierstangen 40 fest verbunden. Die Zentrierstangen 40 werden im unteren Schwenkhebel 37 in Linearkugellagern 41 geführt. Beim Verfahren zentrieren die Stangen 40 das Werkzeugführungsgehäuse 36 mit dem Werkstückbearbeitungsgehäuse 42, das stationär fest verstiftet mit der Achse 10 unterhalb des Aufnahmebehälters 25 angebracht ist.

Nach dem Einschwenken der jeweiligen Bearbeitungsstationen 22, 23 um 90° links bzw. rechts, was dem gleichzeitigen Wegschwenken des Aufnahmescannerbehälters 25 entspricht, wird der vertikale Vorschub des Werkzeugführungsgehäuses 36 eingeleitet und hierbei zentrieren die Stangen 40 den Außendurchmesser des Werkzeugführungsgehäuses 36 mit dem deckungsgleichen Innendurchmesser des Werkstückbearbeitungsgehäuses 42.

Im untersten Bereich der Vorrichtung 1 befindet sich ein Drehteller 43, der Wippen 44 zur Aufnahme von Granulatbehältern 45 innen scharniert aufnimmt.

Die Wippen 44 entsprechen von der äußeren Form einem zylinderförmigen Kreisabschnitt. Sie besitzen eine umlaufende Bordkante, um innen zentriert die Granulatbehälter 45 aufzunehmen.

Über Wippenmitte ist an der Wippenunterseite eine Rundstange 46 angebracht.

Bei der Drehbewegung des Drehtellers 43 überfährt die Rundstange 46 die fest auf der Bodenplatte 11 installierten Kugelrollen 47 und es kommt zu einer Kippbewegung, die zentral von außen in Richtung zur Achsenmitte wirkt. Angehäufeltes Granulat wird durch diese Rüttelbewegung im Behälter verteilt.

Die Rundstange 46 wird bei ihrer vertikalen Bewegung seitlich durch die mit dem Teller 43 verschraubten Stifte 48 geführt.

Die Mantellinie der Rundstangenunterseite liegt in Ruhestellung horizontal waagerecht auf der Oberseite des Drehtellers 43. Die Mantellinie bildet gemeinsam mit den im Drehteller 43 verschraubten Stützstiften 49 die Unterseitenauflage der Wippen 44.

An den Bearbeitungsstationen 22, 23 sind Bearbeitungseinheiten 50, 51 angeordnet, die mit dem oberen Schwenkhebel 21 und dem unteren Schwenkhebel 37 durch die eingespannten Führungsstangen 38 eine starre Einheit bilden. Die Bearbeitungseinrichtungen zum Schneiden und Mahlen 50, 51 liegen auf einer zur zentralen Linie parallelen Linie 52. Die Einheit aus Bearbeitungseinrichtung zum Schneiden und Mahlen 50, 51 ist über ein Loslager 53 und ein Festlager 54 um die starre Zentralachse 10 schwenkbar.

Oberhalb des Loslagers 53 ist mittig zentriert das Stirnrad 30 verschraubt und verstiftet. Das Stirnrad 30 befindet sich im Eingriff mit dem Ritzel 31 des Schrittmotors 32.

Der Festpunkthebel 29 ist verstiftet mit der Achse 10 und trägt den hierauf verschraubten Schrittmotor 31. Mit dem Schrittmotor 32 wird die Bearbeitungseinheit 50 nach links oder die Bearbeitungseinheit 51 nach rechts jeweils um 90° in die Bearbeitungsposition oberhalb des Werkstückbearbeitungsgehäuses 43 geschwenkt.

Der Arm 24 des Aufnahmescannerbehälters 25 ist mittig zentriert mit dem unteren Schwenkhebel 37 verschraubt und verstiftet. Die Arm- bzw. Scannerbehälterposition ist zwischen den auf 180° befindlichen Einheiten 50, 51 auf 90° festgelegt.

Das Werkzeugführungsgehäuse 36 trägt im Innenraum verschraubt den Werkzeugantriebsmotor 55. Das Gehäuse 36 wird über die Führungsstangen 38 geführt und mit den verstifteten Stangen 40 nach dem Einschwenken in die Bearbeitungsposition beim Ausfahren mit dem Gehäuse 42 zentriert.

Der untere Schwenkhebel 37 trägt auf 180° versetzt je eine Einheit 50 bzw. 51, zwei Stück verschraubte Schrittmotore 33 mit den Ritzeln 34. Die Ritzel befinden sich im Eingriff mit den Zahnstangen 35, die in Längsrichtung in die Mantelfläche vom Gehäuse 36 eingelassen sind.

Das Recyclingmaterial wird durch die Öffnung 3 der Vorderwand 16 in den Aufnahmebehälter 25 eingeworfen. Zum Handschutz und zur Materialführung ist hinter der Öffnung an der Vorderwandinnenseite eine Eingriffsmulde 20 befestigt. In Verbindung mit der Eingriffsmulde 20 bildet ein halbrundes Schutz- und Führungselement 56 einen in sich geschlossenen Einwurfraum. Das Schutz- und Führungselement 56 ist mit dem Aufnahmebehälter 25 verschraubt, wobei die Innendurchmesser bei beiden Bauteilen identisch sind.

Bei Einwurf in den Aufnahmebehälter 25 wird durch einen oberhalb am Behälter verschraubten Lese- und Scannerkopf 26 das Material gescannt. Bei Verwendung eines RFID-Systems werden der Werkstoff und das Netto-Soll-Verpackungsgewicht erfasst. Auf der Oberseite des Scannerbodens ist eine elektronische Waage 57 angebracht, die den Gewichts-Ist-Wert ermittelt. Nur bei Übereinstimmung von Soll- und Ist-Wert wird der Bearbeitungsvorgang gestartet. Dies dient zum Schutz gegen verunreinigte oder halb gefüllte Materialien.

Der Lese-Scannerkopf wird mit einem Aufnahmewinkel 58 am oberen Rand des Aufnahmebehälters 25 verschraubt. Der Scannerboden 28 mit der verschraubten elektronischen Waage 57 öffnet und schließt sich über die Zahnriemenachse 27. Seitlich mit dem Behälter und Scannerboden verschraubte Kugelteleskopschienen 59 ermöglichen ein leichtgängiges Öffnen und Schließen des Bodens.

Im oberen und unteren Abschluss des Werkstoffbearbeitungsgehäuses 42 befinden sich um 45° versetzt auf 180° über Achsenmitte Zentrierbuchsen 60. Beim Ausfahren der Bearbeitungseinheiten zentrieren die oberen Stangen 40 und die unteren Stangen 61 die Werkzeugführungsgehäuse 36 und 62 im Gehäuse 42.

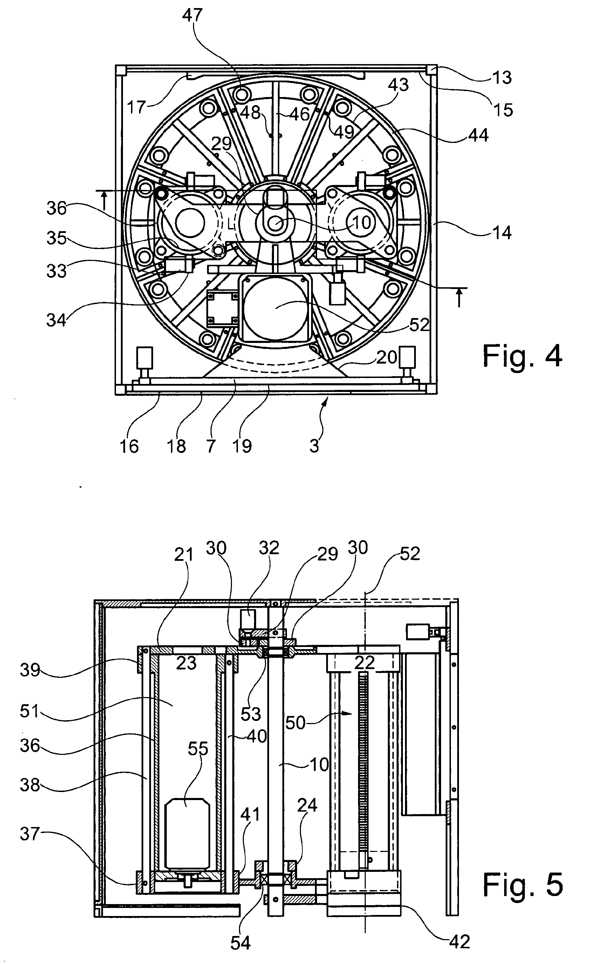

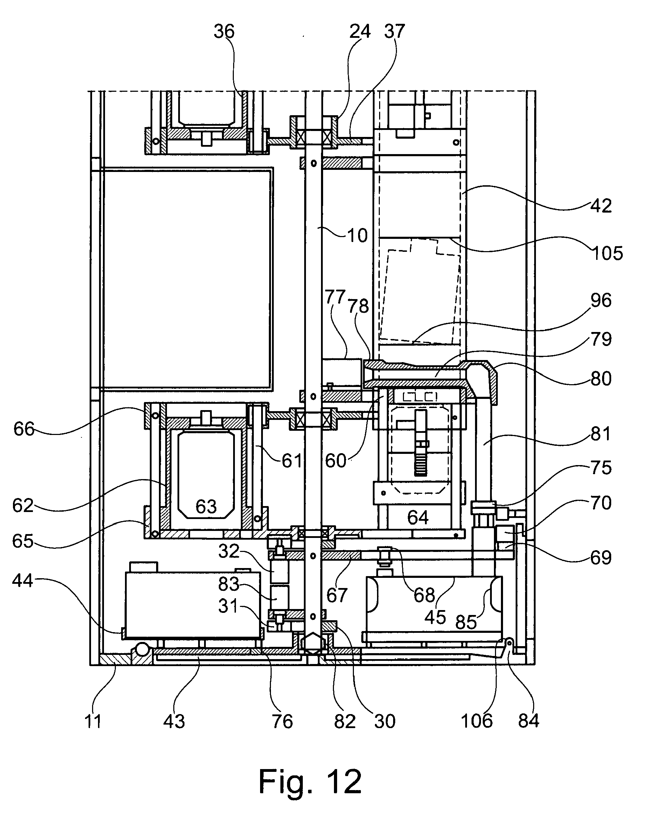

Die Bearbeitungseinheiten 63 und 64 sind im Aufbau und der Arbeitsweise identisch mit den Einheiten 50, 51, die mit Bezug auf Figur 5 beschrieben wurden. Die in Figur 12 gezeigten Schwenkhebel 65, 66 sind spiegelbildlich zu ihrem Gegenpart 21, 37. Der Festpunkthebel 29 entspricht in Figur 12 dem Festpunkthebel 67. Auf der linken Seite des Festpunkthebels 67 ist der Schrittmotor 32 verschraubt und rechtsseitig befindet sich ein Ultraschallsensor 68 und am äußeren Ende befindet sich ein Aufnahmebock 69 für einen Schrittmotor 70. Das Ritzel 71 des Schrittmotors befindet sich im Eingriff mit der Zahnstange 72. Die Zahnstange 72 ist in Längsrichtung in die Mantelfläche der Granulathülse 73 eingelassen. Die Granulathülse 76 wird außen geführt mit der Buchse 74 und innen über ein Vierkantprofil der stationären Führungshülse 75. Die Führungshülse 75 ist mit der Granulathülse 76 verschraubt.

Während des Einschwenkens des Granulatbehälters 45 ist die Granulathülse 73 eingefahren. Beim Erreichen der Abgabe-Entladestellung wird die Hülse über den Schrittmotor in den Behälter eingefahren. An dem starr mit der Achse 10 verstifteten Werkstückbearbeitungsgehäuse 42 ist auf dem unteren Tragarm ein Heißluftgebläse 77 verschraubt. Es mündet mit seiner Öffnung in eine Blasdüse 78, die mit dem Gehäuse 42 verschraubt ist. Das Mundstück des Düsenausgangs deckt in seiner Form den Granu-latentleerungsschlitz 79 des Gehäuses 42 ab.

Gegenüberliegend auf 180° ist der Granulatfangkopf 80 ebenfalls mit dem Gehäuse 42 verschraubt. Zwischen dem Granulatfangkopf 80 und der Führungshülse 75 ist eine starre Rohrleitung 81 verschraubt.

Das Granulat wird mit dem Gebläse aus dem Entleerungsschlitz ausgetragen und dem Granulatbehälter zugeführt. Die Granulatbehälter 45 stehen auf Wippen 44, die mit dem Drehteller 43 mittels Scharnieren 76 verbunden sind. Der Drehteller 43 ist über das Festlager 82 um die starre Achse 10 schwenkbar. Der Schrittmotor 83 mit seinem Ritzel 31, welches sich mit dem tellerverschraubten Zahnrad 30 im Eingriff befindet, schwenkt die Behälter in die gewählte Position. Am äußeren Durchmesser der Wippen 44 ist die Bordkante 106 zum Ausheben der gefüllten Behälter abgesenkt. In der Entladestellung ist zwischen äußerer Wippenbordkante und Entladeöffnung ein Rollenbock 84 am Boden 11 verschraubt. Mit den Griffmulden 85 wird der Behälter 45 angehoben und über den Rollenbock 84 durch die Entladeöffnung gezogen.

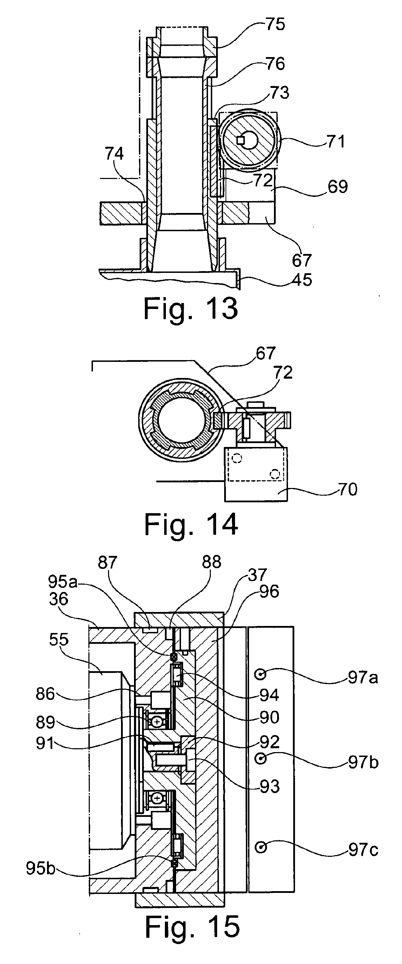

Die Figur 15 zeigt wie im Innenraum des Werkzeugführungsgehäuses 36 bzw. eines Werkzeugführungsgehäuses 62 der Werkzeugantriebsmotor 55 mit den Schrauben 86 befestigt ist. Das Gehäuse hat an seinem Umfang den Gleitführungsring 87 und den Abstreifring 88. In eingefahrener Ruhestellung wird das Gehäuse in den Schwenkhebel 37 geführt. Beim zentrierten Ausfahren des Führungsgehäuses 36 in das Werkstückbearbeitungsgehäuse 42 wird der Werkstückgehäuseinnendurchmesser durch den Abstreifer gesäubert und der nachfolgende Gleitring übernimmt die axiale Führung. Das im Werkzeuggehäuse 36 befestigte Loslager 89 übernimmt die Radialkräfte des Werkzeug-aufnahmedorns 90. Der Werkzeugaufnahmedorn 90 ist mittels einer Passfeder 91 sowie der Endscheibe 92 mit der Schraube 93 auf dem Zapfen des Antriebsmotors 55 befestigt. Zwischen den Stirnflächen des Dornes und des Führungsgehäuses ist zur Aufnahme der Axialkräfte ein Axiallager 94 eingebaut.

Durch die Labyrinthdichtung 95 oberhalb des Axiallagers werden die unterhalb liegenden Lagerstellen vor Verunreinigungen geschützt. Am Außendurchmesser des Werkzeugdorns 90 werden als Zerkleinerungseinrichtung 96 Werkzeuge zum Schneiden und Mahlen aufgenommen und am Umfang mit Stiftschrauben 97 befestigt. Zum Werkzeugwechsel wird das Werkzeug aus dem Schwenkhebel herausgefahren, die Schrauben aus den Arretierungsbohrungen des Aufnahmedorns gelöst und das Werkzeug vom Dorn abgezogen.

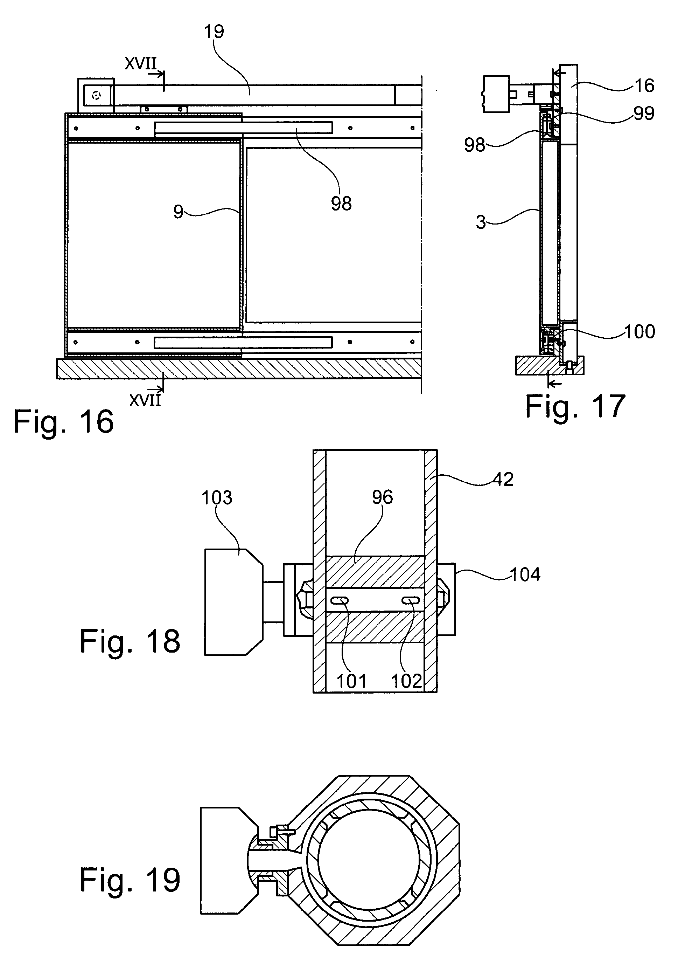

In den Figuren 16 und 17 zeigt die Vorderansicht im geöffneten Zustand die linke Türe 9. Die Kugelteleskopschienen 98 sind mit schallisolierten Türen 3 und Riegeln 99, 100 verschraubt. Die Riegel erstrecken sich in ihrer Länge über die Maschinenbreite und sind endseitig mit den Vierkantprofilen 13 verschraubt. Sie bilden gemeinsam mit der Achse 10, den Platten 11, 12 und den Profilen 13 das Maschinenge-rüst. Erst nach erfolgter Komplettmontage und Funktionstest werden die Einhausungswandprofile 14, 15, 16 am Gerüst verschraubt. Die zweizeilige Türe wird über die Zahnriemenachsen 19 geöffnet und geschlossen.

Die Figuren 18 und 19 zeigen eine Granulatumwälzung. Um eine feine Granulatkörnung zu erreichen, wird das Recycelgut während des Schneid- oder Mahlvorgangs durch Druckluft permanent umgewälzt. Im Bereich der Granulatentstehung sind oberhalb des ausgefahrenen Unterwerkzeugs 96 im Bearbeitungsgehäuse 42 Düsenbohrungen 101, 102 angebracht. Diese Bohrungen werden während des Bearbeitungsvorgangs mit Luft aus dem Gebläse 103 über einen Düsenring 104 beaufschlagt. Das im Vorlauf bereits grob geschnittene Material wird durch die eingeblasene Luft verwirbelt und umgewälzt und somit ständig in neue Schneid- bzw. Mahllagen zu den Schneidflächen der Werkzeuge gebracht. Durch die Reibung der Granulatpartikel untereinander und die gegenläufig rotierenden Fräswerkzeuge 96 entsteht feines Schneid- bzw. Mahlgut.

Zum Start des Bearbeitungsprozesses ist eine Materialerfassung notwendig. Hierzu können kumulativ oder alternativ folgende Ausführungsvarianten eingesetzt werden:

Bei der optischen Lesegerät-Erfassung mit CCD-Scanner wird ein sich auf dem Recyclingprodukt befindlicher Barcode, zum Beispiel ein 1D-Strich- oder 2-D-Matrix-Code wird manuell vor einem einzelnen, stationären, an der Anlage befindlichen CCD-Scanner gehalten. Bei positiver Erfassung leuchtet ein Lichtsignal grün auf und das Recyclingprodukt wird in den Trichter des Aufnahmebehälters eingeführt und der Bearbeitungsvorgang wird gestartet. Alternativ kann anstelle eines CCD-Scanners auch ein Bildverarbeitungsscanner, ein sogenanntes Inside-System, eingesetzt werden. Diese Systeme sind in der Lage, auf Produkten vorhandene Recyclingsymbole zu erfassen, sodass eine Barcode-Kennzeichnung auf den Produkten nicht erforderlich ist.

Bei der optischen Lesegerät-Erfassung mit einem Kamera-Scanner ist wie zuvor beschrieben oberhalb des Aufnahmebehälters ein Scannerring angebracht, der einen 360° Lesebereich abdeckt. Im Scannerring sind z.B. vier Kleinstkameras installiert. Dadurch entfällt das Scannen von Hand. Das Recyclingprodukt wird von oben in den Aufnahmetrichter eingeworfen und fällt in den Aufnahmebehälter. Die Kameralesegeräte erkennen Codes auf allen Materialen im Hochgeschwindigkeitsmodus wie zum Beispiel im vorliegenden Fall bei Fallgeschwindigkeit. Hierbei benötigen alle Verpackungsprodukte einen aufgedruckten Code wie beispielsweise einen 2-D-Matrix-Code.

Bei der Verwendung einer RFID-Erfassung mit einem Lesekopf ist am Aufnahmebehälter ein Lesegerät montiert, das hochfrequente Radiowellen erzeugt, die einen in dem Verpackungsmaterial eingegossenen RFID-Transponder (Chip) erfassen. Der passive Transponder trägt Daten wie Werkstoff und Gewicht des Verpackungsmaterials. Das mit dem Lesekopf erfasste vom Transponder getragene Verpackungsgewicht wird als Soll-Wert über eine auf dem Scannerboden befestigte Waage mit dem Ist-Wert-Gewicht abgeglichen. Nur bei Übereinstimmung von Soll- und Ist-Wert kann der Bearbeitungsvorgang gestartet werden. Hierdurch wird sichergestellt, dass nur 100 % reiner Recyclingwertstoff auf der Anlage verarbeitet wird.

Verpackungen, die mit Fremdmaterial behaftet oder noch befüllt sind, werden nicht verarbeitet und müssen aus dem Aufnahmebehälter entnommen werden. Bei Einführung einer personenbezogenen Wertstoffcard werden die einzelnen Werkstoffe und Gewichte gespeichert und auf einer Karte dem Karteninhaber dokumentiert, um die Wertstoffe gegebenenfalls zu vergüten. Der automatische Bearbeitungsvorgang wird erst nach einer Materialscannung nach einer der drei Methoden gestartet und nicht behandelbare Produkte können von Hand aus dem Aufnahmetrichter wieder entfernt werden.

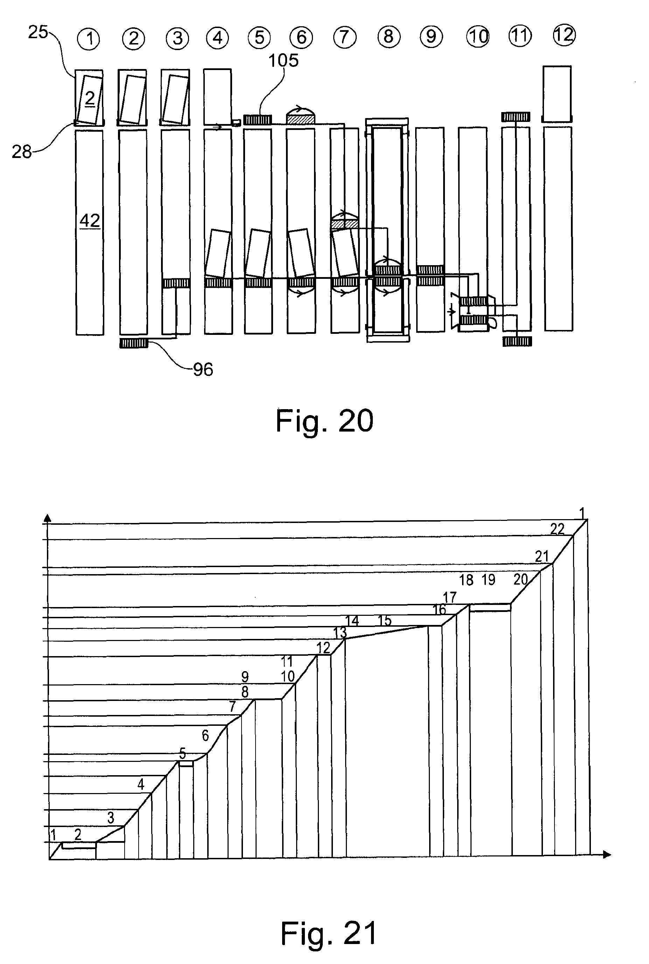

Die Figur 20 zeigt den Bewegungsablauf am und im Werkstückbearbeitungsgehäuse 42. Die Figur 20 zeigt in den Bildern 1 bis 12 jeweils das starre auf der Achse 10 befestigte Werkstückbearbeitungsgehäuse 42. Dieses Gehäuse ist an seiner Oberseite durch den eingeschwenkten in seiner Ausgangsbeladestellung befindlichen Scannerbehälter 25 geschlossen, in dem als Recyclinggut das Werkstück 2 auf dem Scannerboden 28 liegt. Die Unterseite des Behälters 42 ist offen und die unteren Bearbeitungseinheiten 63, 64 sind ausgeschwenkt und befinden sich in ihren Ausgangs-Ruhestellungen.

Das Bild 2 zeigt die Oberseite wie Bild 1 und an der Unterseite ist die eingeschwenkte untere Bearbeitungseinheit mit dem Unterwerkzeug 96 ohne Antriebsbewegung gezeigt.

Bild 3 zeigt an der Unterseite das komplett ausgefahrene und im Behälter eingefahrene Unterwerkzeug 96 ohne Antriebsbewegung.

Bild 4 zeigt an der Oberseite den geöffneten Scannerboden 28. In senkrechter Fallrichtung befindet sich das Recyclinggut auf dem antriebslosen Unterwerkzeug 96.

Bild 5 zeigt an der Oberseite die eingeschwenkte obere Bearbeitungseinheit 22 mit dem Oberwerkzeug 105 ohne Antriebsbewegung. Durch die Fesselung der oberen Bearbeitungseinheit mit dem Aufnahmescannerbehälter 25 wird hierbei der Scannerbehälter gleichförmig mitgeschwenkt.

Bild 6 zeigt die Stellung des Unterwerkzeugs 96 und des Oberwerkzeugs 105 im angetriebenen Zustand. Die Antriebsbewegungen der beiden Fräs- oder Schneidwerkzeuge sind gegenläufig, das Unterwerkzeug linksdrehend und das Oberwerkzeug rechtsdrehend.

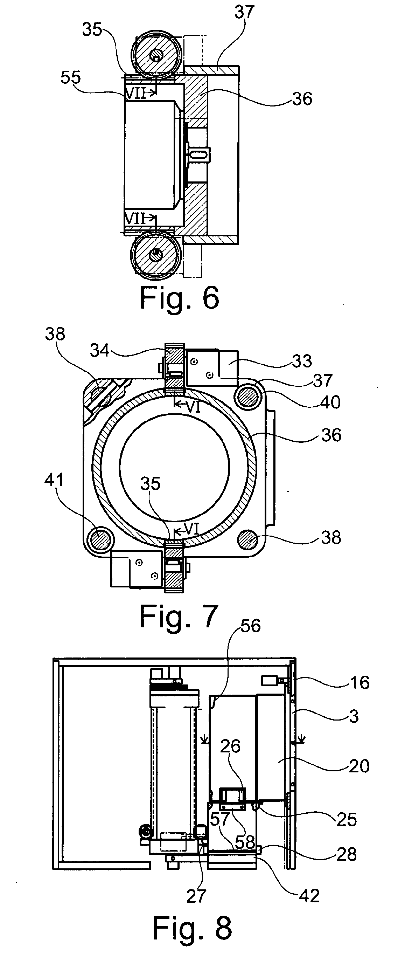

Das Oberwerkzeug 105 nach dem Eilvorschub beim Erreichen des Recyclinggutes ist in Figur 7 gezeigt.

In Endstellung des Arbeitsvorschubes nach der Zerkleinerung des Recyclinggutes ist das Oberwerkzeug in Figur 8 gezeigt. Zur Vermeidung von Bearbeitungsnestern sind die Außendurchmesser der Werkzeuge formschlüssig mit dem Innendurchmesser des Bearbeitungsgehäuses. Die gegenläufigen Drehbewegungen der Werkzeuge garantieren eine Granulatgröße bis zur Pulverisierung. Pulvergranulat entsteht, wenn die Endsitrnflächen der Zentrierstangen 40, 61 in den Bearbeitungseinheiten fast bündig mit der Werkzeugoberseite abschließen.

Beim Ausfahren im Arbeitsmodus, in der Endstellung des Unterwerkzeugs 96 und der Endstellung des Arbeitsvorschubs des Oberwerkzeugs 105 bilden die Stangenstirnflächen den Endanschlag. Hierbei wird vermieden, dass die angetriebenen Werkzeuge 96, 105 in Berührung kommen und eine Selbstzerstörung stattfindet. Ohne mechanische Einstellung ist über die Positionierung der Schrittmotore 32 der gewünschte Granulatspalt nach Korngröße und Werkstoff programmierbar gespeichert. Die Motore ermöglichen ein ruckfreies und endloses Positionieren, eine Drehzahlregelung des Eil- und des Arbeitsvorschubs sowie eine Drehmomentregelung, das heißt eine Erhöhung durch den Arbeitswiderstand am Werkstück bei gleichzeitiger Drehzahlverringe-rung für den Arbeitsvorschub. Alle Parameter sind nach den zu verarbeitenden Werkstoffen im Motorcontroller gespeichert.

Im Bild 9 ist die Stellung der Werkzeuge 96, 105 ohne Antriebsbewegung mit beladenem Granulat gezeigt.

Bild 10 zeigt die Stellung der Werkzeuge mit beladenem Granulat nach dem Fahrweg in die Ausblasposition. Das Unterwerkzeug 96 wird aus seiner Endstellung, zum Beispiel 60 mm, eingezogen. Das Oberwerkzeug von der Arbeitsstellung, zum Beispiel 40 mm, weiter ausgefahren. Zwischen den Werkzeugoberseiten entsteht ein Ausblasspalt von > 20 mm. Bei einer Werkzeughöhe von beispielsweise 30 mm sollten der linksseitige Gehäuseöffnungsspalt zum Eintrag der Blasheißluft und der rechtsseitige Spalt zum Austrag des Granulats mindestens 80 mm betragen. Durch die Einbeziehung der Werkzeughöhe bei der Dimensionierung der Spaltgröße werden die mit Granulat bzw. Staub behafteten Werkzeuge in einem Arbeitsgang durch die Blasluft gereinigt. Mit dem Heißluftgebläse 77 ist je nach Werkstoff die gewünschte Temperatur programmiert vorgegeben, um das Granulat zu trocknen.

Den Rückzug der Werkzeuge aus dem Bearbeitungsgehäuse zeigt das Bild 11 und das Bild 12 zeigt den Scannerbehälter 25 in seiner Ausgangsbeladestellung, während die unteren und oberen Bearbeitungseinheiten in die Ausgangs-Ruhestellung ausgeschwenkt sind.

Die Figur 21 zeigt den Maschinenablauf im Weg-Zeit-Diagramm unter Einsatz einer personenbezogenen Wertstoffkarte. Bei Position 1 wird die Wertstoffkarte in das Anlagenterminal eingeführt, die Person wird identifiziert und die zweiteilige Beladetüre öffnet sich. Bei 2 läuft eine Erkennung mit Scanner und Waage. Bei 3 schließt sich die Beladetüre. Bei 4 wird der Granulatbehälter je nach Material in die Befüllposition gebracht, die auch Scann- und Bearbeitungsposition ist. Bei Position 5 läuft eine Füllstandsmessung im Granulatbehälter mit einem Ultraschallsensor. Bei Position 6 wird die Granulathülse in den Granulatbehälter eingeführt und bei Position 7 wird die untere Bearbeitungseinheit eingeschwenkt. Die Auswahl der Bearbeitungseinheit erfolgt entsprechend der Materialerfassung und es wird entweder eine Bearbeitungseinheit zum Schneiden oder zum Mahlen gewählt. In der Position 8 wird die untere Bearbeitungseinheit im Eilvorschub bewegt und in der Position 9 wird der Boden des Aufnahmebehälters geöffnet. In der Position 10 ist der Boden geöffnet und bei Position 11 wird der Boden geschlossen. In der Position 12 schwenkt die obere Bearbeitungseinheit und in der Position 13 starten die Motoren der Unter- und Oberwerkzeuge. Position 14 zeigt den Eilvorschub der oberen Bearbeitungseinheit und Position 15 zeigt den Arbeitsvorschub der oberen Bearbeitungseinheit. An Position 16 stoppen die Motoren der unteren und der oberen Werkzeuge und an Position 17 wird die untere Bearbeitungseinheit zur Granulatentleerung zurückgezogen. Position 18 zeigt den Vorlauf der oberen Bearbeitungseinheit zur Granulatentleerung und die Position 19 die Entleerung des Granulats mittels des Heißluftgebläses. An der Position 20 werden obere und untere Bearbeitungseinheit zurückgezogen und an Position 21 wird die Granulathülse aus dem Granulatbehälter zurückgezogen. Die obere und die untere Bearbeitungseinheit schwenken an der Position 22 und an Position 1 öffnet die Beladetüre zur Fortsetzung des Zykluses mit einem neuen Behälter.

Die automatische Verarbeitungszeit zwischen Position 1 und zwischen Position 22 ist vom Werkstoff und vom Volumen des Materials des Behälters bzw. des Werkstücks sowie der gewünschten Korngröße des Granulats abhängig. Die hierfür notwendigen Parameter sind in einem elektronischen Speicher hinterlegt und werden automatisch entsprechend der Daten des Scanners ausgewählt.

Wenn ein Ultraschallsensor darauf hinweist, dass der Granulatbehälter voll ist, wird der Arbeitszyklus bei Position 5 gestoppt. Mit einem abschließbaren Schlüsselschalter wird die zweiteilige Entladetür geöffnet und der Granulatbehälter getauscht. Mit dem gleichen Schalter wird die Türe wieder geschlossen und bei Erreichen der Endlage der Zahnriemenachsen wird wie bei Position 6 die Granulathülse in den Granulatbehälter eingeführt.

## Patentansprüche

1. Vorrichtung (1) zum Bearbeiten von Werkstücken (2) mit einer zentralen Linie (8) um die drehbar Bearbeitungseinrichtungen (50, 51) angeordnet sind und mindestens einer Bearbeitungsstation (22, 23), die auf einer zur zentralen Linie (8) parallelen Linie (52) angeordnet ist und in der eine Bearbeitungseinrichtung (50, 51) ein Werkstück (2) bearbeitet.

2. Vorrichtung nach Anspruch 1, ***dadurch gekennzeichnet, dass*** die Linien (8, 52) senkrecht ausgerichtet sind und das Werkstück (2) in die Bearbeitungsstation (22, 23) fällt.

3. Vorrichtung nach einem der vorhergehenden Ansprüche, ***dadurch gekennzeichnet*, *dass*** die Zerkleinerungseinrichtung (96) zwei aufeinander zu bewegbare Fräs- oder Mahleinrichtungen (96, 105) aufweist.

4. Vorrichtung nach Anspruch 3, ***dadurch gekennzeichnet, dass*** die aufeinander zu bewegbaren Fräs- oder Mahleinrichtungen (96, 105) mit gegenläufigen Drehbewegungen aufeinander zu bewegen.

5. Vorrichtung nach einem der Ansprüche 3 bis 4 ***dadurch gekennzeichnet, dass*** die Zerkleinerungseinrichtung (96) eine Ausblaseinrichtung (77) aufweist.

6. Vorrichtung nach einem der Ansprüche 3 bis 5, ***dadurch gekennzeichnet, dass*** oberhalb der Zerkleinerungseinrichtung (96) eine Bearbeitungsstation (22, 23) angeordnet ist, die eine Messeinrichtung aufweist.

7. Vorrichtung nach Anspruch 6, ***dadurch gekennzeichnet, dass*** die Messeinrichtung einen Scanner (26) aufweist.

8. Vorrichtung nach Anspruch 6 oder 7, ***dadurch gekennzeichnet*, *dass*** die Messeinrichtung eine Waage (57) aufweist.

9. Vorrichtung nach einem der Ansprüche 3 bis 8, ***dadurch gekennzeichnet, dass*** unterhalb der Zerkleinerungseinrichtung (96) ein Behälter (45) angeordnet ist.

10. Vorrichtung, insbesondere nach einem der vorhergehenden Ansprüche, bei der der Werkstücktransport von der Rohmaterialzuführung in eine Prüf-Messstation über eine Bearbeitungsstation bis zu einer Fertigproduktentnahme durch die Werkstückschwerkraft erfolgt.

11. Vorrichtung, insbesondere nach einem der vorhergehenden Ansprüche, bei der alle verwendeten Bearbeitungsstationen auf einer senkrechten Achse angeordnet sind.

12. Vorrichtung, insbesondere nach einem der vorhergehenden Ansprüche, die eine in ihrer Formgebung unveränderliche Bearbeitungsstation für alle zu bearbeitenden Werkstücke aufweist.

13. Vorrichtung, insbesondere nach einem der vorhergehenden Ansprüche, die eine Bearbeitungsstation aufweist, in der das Werkstück nicht eingespannt bearbeitet wird.

14. Vorrichtung, insbesondere nach einem der vorhergehenden Ansprüche, bei der der Außendurchmesser einer Bearbeitungseinheit formschlüssig am Innendurchmesser einer Bearbeitungsstation geführt wird, so dass die Bearbeitungseinheit in senkrechter Achse eintauchen kann.

15. Verfahren zum Zerkleinern von Behältern, bei dem die Behälter in eine Beladestation gegeben werden, in eine Zerkleinerungsstation fallen, dort zu Granulat zerkleinert werden und das Granulat in einen Behälter (45) fällt.
